(19) Europäisches Patentamt / European Patent Office / Office européen des brevets

(11) **EP 2 822 135 B1**

(12) **EUROPEAN PATENT SPECIFICATION**

(45) Date of publication and mention
of the grant of the patent:
**29.08.2018 Bulletin 2018/35**

(51) Int Cl.:
*H02J 3/18* *(2006.01)*          *H02J 3/22* *(2006.01)*
*H02J 3/34* *(2006.01)*

(21) Application number: **13174852.7**

(22) Date of filing: **03.07.2013**

(54) **Method and arrangement for transferring electrical power for subsea applications**

Verfahren und Anordnung zur Übertragung von elektrischer Energie für Unterwasseranwendungen

Procédé et agencement pour transférer de l'énergie électrique pour des applications sous-marines

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.01.2015 Bulletin 2015/02**

(73) Proprietor: **Siemens Aktiengesellschaft 80333 München (DE)**

(72) Inventors:
• **Boe, Ove**
  **7549 Tanem (NO)**
• **Haugan, Espen**
  **7052 Trondheim (NO)**

(56) References cited:
**WO-A1-01/26201       WO-A1-2005/031940
US-A- 4 199 804       US-A1- 2013 033 103**

**Description**

Field of invention

The present invention relates to a method and to an arrangement for transferring electrical power in the sea, in particular to a subsea grid, further in particular in order to provide electrical power at a subsea exploration site.

Art Background

Document US 2013/0033103 A1 discloses systems and methods for distributed impedance compensation in subsea power distribution, wherein a plurality of distributed impedance compensation devices are used to control the impedance of the subsea power distribution system. Distributed impedance compensation devices are used, that are inductively coupled to a subsea power transmission cable.

Document WO 01/26201 A1 discloses a plant for transmitting electric power and a method for reconstructing such a plant, wherein rotary converters are designed to convert an alternating current on the high voltage connection having a second frequency, the magnitude of which is adapted to electric conditions of the plant. The electric conditions relate to all types of parameters, such as the plant voltage on which the high voltage connection is intended to be put, the maximum power possible transmit to the connection, the length of the connection, the physical design of the connection - overhead line or cable or the like.

Conventional electrical AC power cable transmission may be limited in distance due to the cable properties. Typical max imum AC transmission distance at 50/60 Hz may be between 100 km and 200 km. If longer distances are needed the today's state of the art solution is DC transmission. For subsea power, it is very interesting to reach out longer than 200 km, for arctic areas, hydro carbon reservoirs with step outs up to 600 km from shore is explored For powering consumers at the subsea exploration site, such as pumps, compressors, motors etc., AC power may often be required. Therefore, in a conventional system, the DC power transmitted to the sea ground has to be converted into AC power, in order to be appropriate to power the consumers at the subsea exploration site. However, converting the DC power to an AC power requires large and heavy equipment which poses a number of problems for setting up the exploration site and also increases the costs of the system. When designing a subsea power grid, reliability may be one of the main key factors. To increase reliability of a subsea power grid, it may be important to limit the complexity and also to limit components with low reliability specially of the non redundant types of components. Today only medium voltage distribution technology for AC solution may be reliable. This means that DC power needs to be converted to AC power subsea for subsea DC transmission systems. The DC to AC converting system may be a very complex system and consists of an extreme high amount of components and may reduce reliability compared to a subsea AC transmission system.

There may be a need for a method and an arrangement for transferring electrical power in the sea, which facilitates powering of electrical AC power of subsea consumers with step out much longer than today's maximum transmission distance of typical 100-200 km. Benefits would also be if this increases the reliability and at the same time reduces the size of the equipment. Further, there may be a need to provide AC consumers with AC power in a more simple manner and requiring smaller or lighter equipment than a conventional system.

Summary of the Invention

This need may be met by the subject matter according to the independent claims. Advantageous embodiments of the present invention are described by the dependent claims.

According to an embodiment of the present invention, it is provided a method according to claim 1 for transferring electrical power in the sea (in particular to a subsea grid), the method comprising generating AC power, guiding, at least partially underwater, the AC power through a cable from a first end of the cable to a second end of the cable, wherein a first reactor is connected near the first end of the cable and a second reactor is connected near the second end of the cable, wherein inductances of the reactors are selected/adjusted, in order to at least partially (or at least substantially) (i.e. disregarding unavoidable inaccuracies) compensate for reactive power generated in the cable, wherein the inductances of the reactors are adjusted, in order to avoid resonances close to the frequency of the AC power, the method further comprising adjusting the frequency of the AC power such that a voltage ratio between a second voltage and a first voltage changes less than a threshold, when a power consumption of a load connected to the second end of the cable changes from a first value to a second value, wherein the second voltage is indicative of a potential difference between the second end of the cable and a reference potential, wherein the first voltage is indicative of a potential difference between the first end of the cable and the reference potential. Thereby, "at least partially compensate" for reactive power generated in the cable means to compensate for the reactive power generated in the cable within unavoidable process and/or measurement errors, including to completely compensate for reactive power generated in the cable. The inductances of the reactors may be selected/adjusted, in order to compensate for a majority of, in particular for between 90 % and 100 %, further in particular for between 95 % and 100 %, of reactive power generated in the cable.

The first reactor and/or the second reactor may compensate for the reactive power generated by the capacitor effect of the cable. For this purpose, the inductances of the reactors are appropriately selected. This selection may be done by starting with a inductor size that will compensate for the total or a part of the cable by solving the equation w*L = 1/(w*C) where w is the angular frequency [rad/sec], L is the reactor inductance and C is the capacitance of the total or a part of the cable. Thereby, a respective reactor (having the inductance as selected/determined) may be associated with and connected to the total or the respective part of the cable.

On one end, the respective reactor may be connected to the cable and on another end the reactor may be connected to an earth potential. The earth potential might be provided by a connector at the ground of the sea or may be provided by a connector above the sea level. By providing the first reactor and/or the second reactor, a change of a voltage at the second end of the cable may be kept within acceptable limits such that equipment at the subsea exploration site (which may in particular be connected to the second end of the cable) may not be damaged and may not be required to be tripped. Thus, operation may continue even in the case where a load connected to the second end of the cable changes regarding its power consumption. Furthermore, resonances occurring within the cable depending on the frequency of the AC power and the length of the cable may be reduced, to enable a secure and reliable operation of transferring the electrical power (in particular to a subsea grid).

According to an embodiment of the present invention, between 3 and 60 reactors are additionally connected along the cable between the first end and the second end of the cable. These further reactors may be arranged spaced apart from each other, in particular equally spaced apart from each other. By providing the further reactors, compensation for the reactive power generated in the cable may be more effective, in particular in order to reduce a change of the voltage when the load changes regarding its power consumption.

According to an embodiment of the present invention, the inductances of the reactors and/or the further reactors are selected based on a frequency of the AC power and properties of the cable, in particular the capacity of a part or a total of the cable the reactor is associated with and/or connected to. Thereby, compensation of the capacitor effect may be improved.

According to an embodiment of the present invention, the reactors and/or the further reactors are connectable and disconnectable from the cable. Thereby, depending on the configuration (in particular depending on the power consumption of the load connected to the second end of the cable), some reactors may be connected and other connectors may not be connected to the cable, in order to improve the compensation of the reactive power generated in the cable.

In particular, calculations or simulations may be performed in order to determine, whether to connect or whether to disconnect a particular reactor from the cable.
According to an embodiment of the present invention, at least one reactor of the reactors or the further reactors comprises an active and/or passive filter. The active filter may for example be an analog filter or a digital filter. In particular, the filter may be adaptive such that a filter band may be adjustable. A passive filter may for example comprise an inductance. Thereby, the transfer of the AC power may be improved, in particular by reducing resonance peaks.

According to an embodiment of the present invention, the inductances of the reactors and/or the further reactors are adjusted, in order to avoid resonances close to the frequency of the AC power.

The resonances close to the frequency of the AC power may at least be reduced by appropriately adjusting or selecting the inductances of the reactors and/or the further reactors. Thereby, transfer of the AC power may be improved.

According to an embodiment of the present invention, the reactors provide reactive compensation for 16.7 Hz or 50 Hz.

In particular, conventionally AC power having a frequency of 16.7 Hz or 50 Hz may be available. Thereby, the method may employ a conventional power source, which may widen the applicability range of the method.
According to an embodiment of the present invention, the method further comprises adjusting the frequency of the AC power such that a voltage ratio (Uload/Uin) between a second voltage (Uload) and a first voltage (Uin) changes less than a threshold, when a power consumption of a load connected to the second end of the cable changes from a first value to a second value, in particular from 0 MW to 100 MW, wherein the second voltage represents a potential difference between the second end of the cable (or a location where the load is connected) and a reference potential, wherein the first voltage represents a potential difference between the first end of the cable (or an output terminal of a power supply supplying the AC power to the cable) and the reference potential.

In particular, the frequency of the AC power may be adjusted for a situation when e.g. there is substantially no load connected to the second end of the cable or if there is e.g. an average load (i.e. a load which is expected on average) connected to the second end of the cable. In particular, for the average load expected for the particular application (or e.g. zero load), the frequency may be optimized. When starting from this frequency, upon changing the power consumption of the load, the frequency may either be maintained or even changed with respect to the starting frequency, in order to keep a voltage change or voltage drop in acceptable limits, upon changing the power consumption of the load.

According to an embodiment of the present invention, adjusting the frequency comprises calculating plural voltage ratio changes for plural test frequencies, for each test frequency considering at least two test power consumptions of loads, in order to obtain the respective voltage ratio change, wherein the frequency to be adjusted is selected from the plural test frequencies for which the calculated voltage ratio change is lower than the threshold.

The calculation to obtain plural voltage ratio changes may involve modelling the cable by setting up an equivalency circuitry or scheme, in particular including a number of PI-elements. Thereby, electrical properties of the entire system for transferring the electrical power may be calculated or obtained for all plural test frequencies. Based on the results of the calculations, this frequency or those frequencies may be selected for which desired electrical properties are to be expected.

Thereby, the method may be simplified. The method may in particular be performed utilizing a computing device, such as a computer or at least one arithmetic/logical processor.

According to an embodiment of the present invention, the method further comprises calculating plural input currents for plural test frequencies, the input current representing a respective current of the generated AC power supplied to the first end of the cable, for each test frequency considering at least one test power consumption of a load, wherein the frequency to be adjusted is selected from the plural test frequencies for which the input current is within a range according to a rating of the cable.

Also the input current may be a parameter during transfer of the electrical power which may require control. In particular, the cable may have a rating which defines a maximal current which may flow within the cable without damaging the cable. Thus, calculating the plural input currents for the plural test frequencies may further enable to select this frequency or those frequencies which may result in a proper operation of the transfer of the electrical energy without damaging the cable and other equipment, such as load units.

According to an embodiment of the present invention, a frequency between resonance peaks of a calculated voltage ratio curve is selected, in particular between a first and a second resonance peak or in particular between a second and a third resonance peak, wherein the frequency in particular further depends on properties of the cable, in particular cross-sectional size and/or material of the cable.

When a frequency between resonance peaks of the calculated voltage ratio curve is selected, extremely high voltage may be avoided, thereby improving the security and reliability of the method, while equipment may be avoided to be damaged.

According to an embodiment of the present invention, the method further comprises transforming a voltage of the AC power to a higher voltage and supplying the transformed voltage to the first end of the cable, and/or transforming the AC power guided through the cable at the second end of the cable and supplying the transformed AC power to a load.

Since the power is provided as AC power, the size of iron cores within respective transformers may be reduced compared to a situation, where the electric power is transferred using a DC transmission method. Thus, the equipment required for performing the method may be less voluminous and also lighter and potentially also less expensive than equipment which is required for performing a DC transmission method.

Further, transforming the voltage at the topside and also transforming the AC power at the subsea side may provide a larger flexibility of the voltage which is utilized to supply the AC power to the first end of the cable and regarding a flexibility of the voltage at the second end of the cable which may in particular comply with voltage requirements of a subsea distribution grid.

According to an embodiment of the present invention, the frequency of the AC power is between 10 Hz and 300 Hz, in particular between 50 Hz and 150 Hz, further in particular different from 50 Hz, wherein in particular the cable is arranged at least partially, in particular 80% and 100 % of the length of the cable, underwater, wherein in particular the AC power is supplied from a AC power supply, in particular generator or a converter, to the first end of the cable.

In a conventional system, only DC power has been transferred underwater, however requiring relatively heavy and large equipment for when converting the DC power to AC power required at the subsea exploration site.

According to an embodiment of the present invention, the first voltage is predetermined and the second voltage is calculated for a given power consumption of the load, in particular utilizing a model of the cable, further in particular including plural PI-elements, wherein the second end of the cable is between 1000 m and 4000 m below sea level, wherein the cable has a length between 100 km and 1000 km, in particular between 200 km and 600 km, wherein the voltage at the cable is in particular between 80 kV and 100 kV, the method in particular further comprising depending on the load, adjusting the frequency and/or the first voltage, in particular involving changing (e.g. decreasing) the frequency when power consumption of the load changes (e.g. increases).

It should be understood that features individually or in any combination disclosed, described, applied or provided for a method for transferring electrical power in the sea may also be applied individually or in any combination to an arrangement for transferring electrical power in the sea according to an embodiment of the present invention and vice versa.

According to an embodiment of the present invention, it is provided an arrangement according to claim 14 for transferring electrical power in the sea, the arrangement comprising a power supply for generating AC power, a cable for guiding, at least partially underwater, the AC power through the cable from a first end of the cable to a second end of the cable, a first reactor connected near the first end of the cable, and a second reactor connected near the second end of the cable, wherein inductances of the reactors are selected, in order to at least substantially compensate for reactive power generated in the cable, wherein the inductances of the reactors are adjusted, in order to avoid resonances close to the frequency of the AC power, wherein arrangement is adapted to adjust the frequency of the AC power such that a voltage ratio between a second voltage and a first voltage changes less than a threshold, when a power consumption of a load connected to the second end of the cable changes from a first value to a second value, wherein the second voltage is indicative of a potential difference between the second end of the cable and a reference potential, wherein the first voltage is indicative of a potential difference between the first end of the cable and the reference potential.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Embodiments of the present invention are now described with reference to the accompanying drawings.

Fig. 1 schematically illustrates an arrangement for transferring electrical power according to an embodiment of the present invention;

Fig. 2 illustrates a graph depicting a dependency of a voltage ratio observed in an arrangement of Fig. 1 in dependence of the frequency of the AC power;

Fig. 3 illustrates a portion of the graph of Fig. 2 illustrating a method for transferring electrical power according to an embodiment of the present invention performed by the arrangement of Fig. 1 according to an embodiment of the present invention;

Fig. 4 illustrates a graph depicting an input current in dependence of a frequency corresponding to the graph of Fig. 3 and illustrating a method for transferring electrical power according to an embodiment of the present invention performed by the arrangement of Fig. 1 according to an embodiment of the present invention;

Fig. 5 illustrates a dependency of a voltage ratio from the frequency considered in and illustrating a method for transferring electrical power according to an embodiment of the present invention when a capacity effect of a cable is compensated for using two or more reactors;

Fig. 6 illustrates a dependency of an input current from the frequency for illustrating a method of transferring electrical power according to an embodiment of the present invention when a capacity effect of a cable is compensated for using two or more reactors;

Fig. 7 illustrates a dependency of a voltage ratio from the frequency of AC power when a capacity effect of a cable is compensated for using two or more reactors; and

Fig. 8 illustrates a dependency of an input current from the frequency when a capacity effect of the cable is compensated for using two or more reactors connected to the cable.

Detailed Description

The illustration in the drawings may be in schematic form.

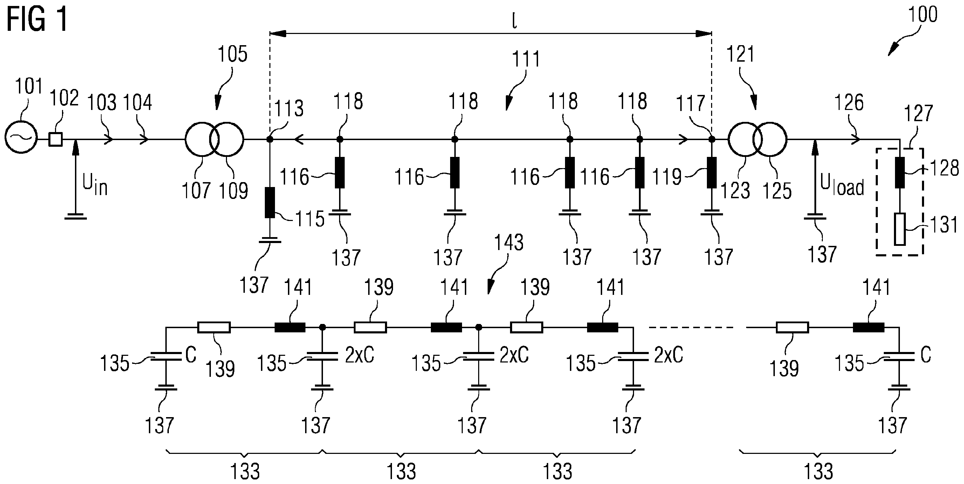

Fig. 1 schematically illustrates an arrangement 100 for transferring electrical power in the sea according to an embodiment of the present invention performing a method according to an embodiment of the present invention. The arrangement 100 comprises (above the sea level) a power source 101 connected to a converter which are adapted to generate AC power 103 which is supplied to a topside transformer 105 having a primary coil 107 which is inductively coupled to a secondary coil 109. The topside transformer 105 in particular transforms a voltage of the AC power 103 to a higher voltage and supplies the transformed voltage to a cable 101 which may at least partly be arranged under water, such as in the sea. The cable 101 may have a length between 100 km and 1000 km. Further, it may be used to supply the AC power 103 to a subsea exploration site or to supply to a subsea distribution grid.

The AC power 103 is associated with an input current 104. The voltage generated by the power supply 101 or output by the converter 102 is indicated in Fig. 1 with reference sign $U_{in}$ and is also referred to as first voltage. The topside transformer 105 provides the transformed voltage $U_{in}$ at a first end 113 of the cable 111. At this first end 113, a reactor 115 is connected (to an earth potential), to compensate for a capacitor effect of the cable 111. The reactor connected at the first end 113 of the cable 111 may have a suitable adjusted or selected inductance or reactance to compensate for the capacitor effect of the cable 111.

When it is dealt with around 200 km step outs (cable length) at 50 Hz, in a conventional system voltage may change from load condition to no-load condition, due to the parallel capacitor effects in the cable. The stationary effect of the capacitors in the cable may follow according to 1/(j*w*C), where j is the imaginary number, w = 2*pi*frequency and C is the capacitance. When, according to an embodiment of the present invention, frequency is reduced or increased from 50 Hz, also the effect of the capacitance in the cable may be reduced stationary.

The AC power 103 is then transferred through the cable 111 to a second end 117 of the cable 111, wherein this second end 117 is located under water, in particular at a ground of the sea. At the second end 117 of the cable 111, a second reactor 119 is connected to the earth potential, in order to compensate the capacitor effect of the cable 111. Close to the second end 117 of the cable 101, a subsea transformer 121 having a primary side 123 and a secondary side 125 which is inductively coupled to the primary side 123 is located. The subsea transformer 121 transforms the voltage at the cable 111, e.g. a voltage between 80 kV and 120 kV, in particular around 90 kV, to a desired voltage at the subsea grid, for example to between 30 kV and 50 kV, in particular around 36 kV. At the secondary coil 125 of the subsea transformer 121, a load 127 is connected having an inductance 129 and a resistance 131 and further may comprise a not illustrated capacitance. The load 127 may be a single load, may be a plurality of loads and/or may represent an entire subsea distribution grid having plural loads which may be connectable and disconnectable or switched on and off in any circuit topology.

According to an embodiment of the present invention, the cable 111, in particular the electrical properties of the cable 111, is modelled using a series connection of a plurality of PI-elements 133. Thereby, each PI-element 133 has a capacitor 135 connected to the earth potential 137 and a resistor 139 connected to one end of the capacitor 135 and further an inductance 141 which is connected in series with the resistor 139. The PI-elements 133 are connected in series as an equivalency circuit 143 for modelling or describing the electrical properties of the cable 111. The equivalence circuitry 143 is used according to an embodiment of the present invention to calculate electrical properties of the arrangement 100, in particular a second voltage $U_{load}$ representing the voltage applied to the load 127 when the power supply 101 provides a first voltage $U_{in}$.

In particular, the equivalency circuit 143 may be used to calculate the second voltage $U_{load}$ given the first voltage $U_{in}$ for different power consumptions 126 of the load 127. Further, also the input current 104 may be calculated using the equivalency electric diagram or circuit 143 for a given first voltage $U_{in}$ and a given power consumption 126 of the load 127. Based on such calculations, further more detailed simulations may be performed, in order to determine electric properties of the arrangement 100, based on which for example frequency of the AC power 103 and/or voltage $U_{in}$ of the AC power 103 may be selected or adjusted, in particular in dependence of a length 1 of the cable 111 and in dependence of the power consumption 126 (in particular including active power consumption and/or reactive power consumption) of the load 127. According to an embodiment of the present invention, the reactors 115, 119 may be missing in the arrangement 100 illustrated in Fig. 1 or may be switched off or disconnected.

According to an embodiment of the present invention, the power supply 101 is adapted to adjust a frequency of the AC power 103 in dependence of the length 1 of the cable 111 between the first end 113 and the second end 117 of the cable.

In other embodiments of the present invention, additionally or alternatively, at least two reactors 115 and 119 may be connected to the cable, one of the reactors may be connected to the first end (or close to the first end) 113 of the cable 111 and another reactor 119 may be connected close to the second end 117 of the cable 111. According to still further embodiments of the present invention, further reactors 116 may be connected along the cable 111 at plural locations 118 which may be spaced apart from each other. In particular, the locations 118 may be evenly spaced apart from each other. In particular, the arrangement 100 may exclusively or additionally be configured in a way such that inductances of the reactors 115, 119 (and in particular also of the further reactors 116) are selected, in order to at least substantially compensate for reactive power generated in the cable 111. The values of the inductances of the reactors 115, 116, 119 may dependent on the properties of the cable 111 and/or the frequency/voltage of the power supply and possibly on further parameters, such as voltage, cable length). As a thumb rule the cable 1/(w*C) may be the same as the total compensation of the parallel inductances w*L. In this case w*L may cancel out the 1/(w*C).

According to an embodiment of the present invention, the power supply 101 comprises a converter for changing the frequency of the AC power 103 guided through the cable 111 in dependence of a value of the power consumption 126 of the load 127 which is connected to the second end (in particular via the subsea transformer 121) of the cable 111.

A cable that is electrically described with resistance R [Ohm/m], inductance L [H/m] and capacitance C [F/m] may have cable resonances as a function of the cable travelling time. The wave velocity, v, of the cable, may be given by:

```
v=1/sqrt (LC).
```

The travelling time $\tau$ of the cable is given by

$$\tau = d/v.$$

Thereby, d (also referred to as 1) is the length of the cable, for example the cable 111 illustrated in Fig. 1.

Resonances in the cable 111 may be found at the following travelling times (or frequencies):
$1/4\tau$, $3/4\tau$, $5/4\tau$ ...
Further, damping frequencies may be found at:
$2/4\tau$, $4/4\tau$, $6/4\tau$ ...

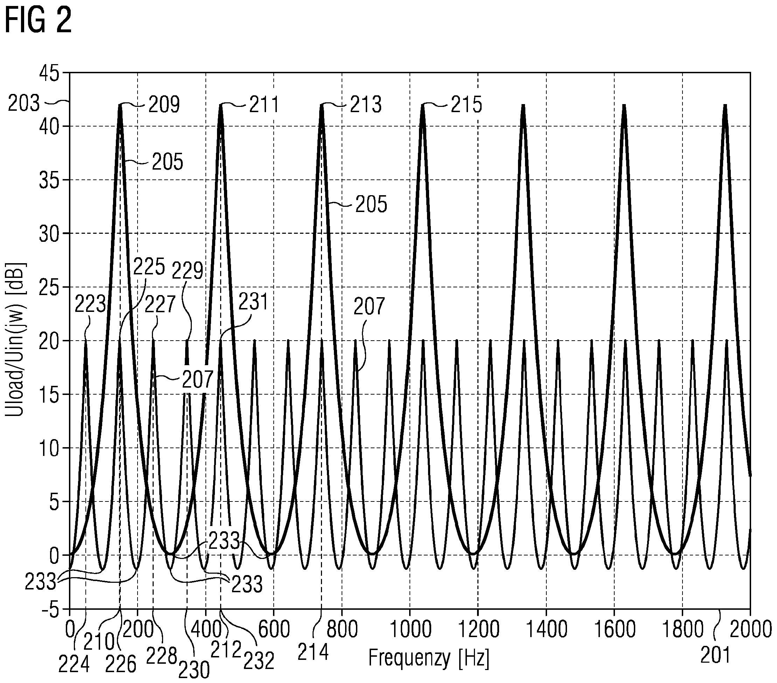

Fig. 2 illustrates a so-called cable frequency plot illustrating a dependency of a voltage ratio (ordinate 203) from a frequency (abscissa 201). In particular, the voltage ratio is the ratio between the second voltage $U_{load}$ (see Fig. 1) and the first voltage $U_{in}$ (see Fig. 1). In particular, the curve 205 illustrates the situation of a length 1 of the cable of 200 km, while the curve 207 illustrates the situation, when the length 1 of the cable 111 is 600 km. The curves 205, 207 represent calculated or simulated curves, when the cable 101 is described or modelled with 500 PI-elements and the following electrical data (e.g. data from a 123 kV, 300 mm$^2$ cable):

Rc=0.0601 [Ohms/km]
Cc=0.17 e-6 [F/km]
Xc50=0.13 [Ohm/km]
Lc=4.1380 e-4 [H/km]

In particular, the curve 205 has resonance peaks 209 (first resonance peak), 211 (second resonance peak), 213 (third resonance peak), 215 (fourth resonance peak) and so on. In between the resonance peaks 209, 211, 213, 215, valleys of low values 221 are present which may correspond to the damping frequencies explained or defined above.

Further, the curve 207 comprises a first resonance 223, a second resonance 225, a third resonance 227, a fourth resonance 229, a fifth resonance 231 and so forth. Also between these resonances 223, 225, 227, 229 and 231, valleys 233 are present.

It should be noted that the frequencies at which the resonance peaks occur for the cables of different lengths are at different resonance frequencies. In particular, the resonance 209 occurs at a frequency 210, the resonance 211 occurs at a frequency 212, the resonance 213 occurs at a frequency 214. In contrast, the frequency of the cable of length 600 km for the resonance 223 occurs at the frequency 224, the resonance 225 occurs at a frequency 226, the resonance 227 occurs at a frequency 228, the resonance 229 occurs at a frequency 230 and the resonance 231 occurs at a frequency 232 and so forth, wherein the frequencies 210, 212, 214 are different from the frequencies 224, 226, 228, 230, 232 and so forth. This observation is exploited according to embodiments of the present invention to enable a reliable transfer of electrical power 103 from a topside facility to a subsea exploration site.

In particular, based on the relationship $\tau$=d/v, the resonance or resonances 209, 211, 213, 215 should be at:
149.0, 447.1, 745.2, 1043.2, 1341.3 Hz for the cable of length 200 km and should be
49.7, 149.0, 248.4, 347.7, 447.1 Hz for a cable of length 600 km.

According to an embodiment of the present invention, also an input current 104 in dependence of the frequency is calculated for the situations of cable lengths considered in Fig. 2.

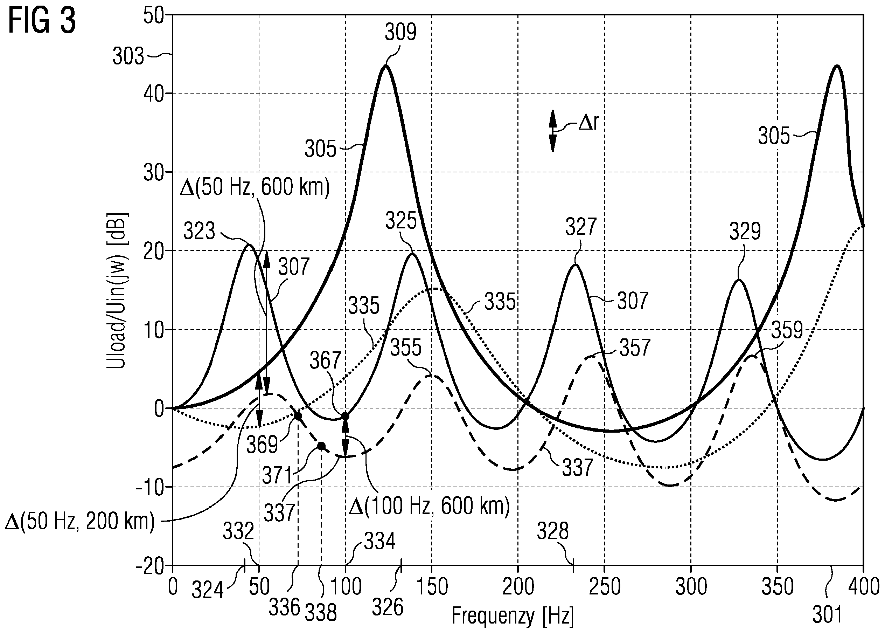

Fig. 3 illustrates a portion of the curves 205, 207 illustrated in Fig. 2 as the curves 305 and 307 for the situation when the power consumption 126 of the load 127 is substantially 0, i.e. such that substantially no load 127 is connected to the second end 117 of the cable 111, as illustrated in Fig. 1.

In addition to this situation where no load is connected to the cable 101, Fig. 3 illustrates curves 335, 337 corresponding to the situation when a load of 80 MW is connected to the second end 117 of the cable 111. Thus, the curve 335 represents the situation when the length of the cable is 200 km and when the power consumption 126 of the load 127 is 80 MW. Further, the curve 337 represents the situation where the length of the cable is 600 km and the power consumption 126 of the load 127 is 80 MW. In particular, the transformers 105, 121 are 100 MVA transformers and the load impedance values are 90 kV and the power factor is 0.95. All transformer and motor voltages in the arrangement 100 is 90 kV.

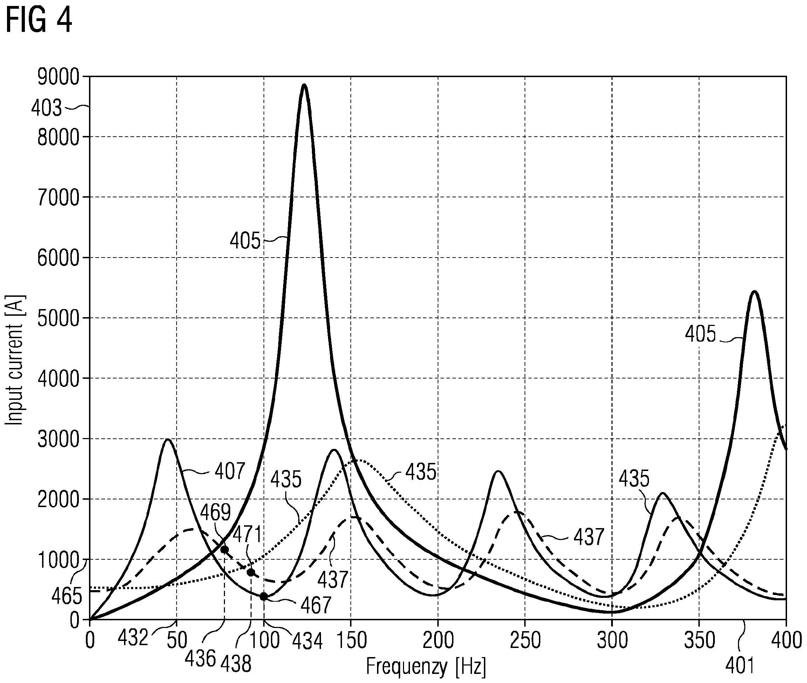

Fig. 4 further illustrates the input current 104 (ordinate 403) in dependence of the frequency (abscissa 401) for the length 1 of the cable of 200 km and 600 km and the situation where no load or an 80 MW load is connected to the second end of the cable 101. Thereby, reference sign differing only in the first digit label input current curves in Fig. 4 which correspond to the curves labelled with a reference sign differing only in the first digit of the corresponding voltage ratios in Fig. 3. For example, the curves 405, 435 represent the input current of a 200 km long cable having no load and an 80 MW load, respectively, connected at the second end of the cable 111. Further, the curves 407, 437 correspond to the cable of length 600 km, when no load or an 80 MW load, respectively, is connected to the second end of the cable.

As can be taken from Fig. 3 and Fig. 4, for a 200 km long cable (200 km step out), 50 Hz (see abscissa 301 in Fig. 3 and 401 in Fig. 4) may be taken as a possible working frequency, wherein the frequency of 50 Hz is indicated by reference sign 332 or 432, respectively. Here, at 50 Hz, for the case of a 200 km long cable, the change of voltage ration for the situations where no load and where an 80 MW load is connected to the cable is indicated by the value $\Delta$(50 Hz, 200 km). However, for the case of a 600 km long cable, the respective change Δ(50 Hz, 600 km) is very big such (in particular bigger than the threshold Δr indicated in Fig. 3) that a large voltage change occurs upon changing the load from no load to 80 MW. Thus, it is not possible to operate a 600 km cable at 50 Hz due to voltage amplification and high resonance currents (compare also the curves 407, 437 for the case of a 600 km long cable which indicate that the currents at 50 Hz are bigger than allowed according to a rating of the cable). A rating limit (exemplary at a current of 1000 A) is indicated with reference sign 465.

However, at the frequency 100 Hz (reference sign 334, 434), the change of the voltage ratio Δ(100 Hz, 600 km) from no load to an 80 MW load is reasonably small and also the currents of the curves 407, 437 at 100 Hz are below the rating limit 465 of the cable. In particular, the following electrical properties are obtained after simulating transferring AC power 103 with a frequency of 100 Hz through a cable 101 of a length 1=600 km:

    100 Hz and 600 km cable:
    Uload/Uin no load: -1.095 dB = 10^(-1.095/20) =
    0.8816
    Uload/Uin load: -6.169 dB = 10^(-6.169/20) = 0.4915
    Input current no load: 367.5 A
    Input current load: 686.4 A

The voltage difference is, for this frequency 39.0 % based on nominal values. At the same time as the current is close to within the nominal current of the cable of 510 A. The cable cross section may be increased to 400 mm$^2$ and then the cable current may typically be in the range of 700 A. Here some iteration may need to be done to find an exact suitable cable and frequency.

If the subsea transformer is designed with a high secondary voltage to step the voltage up to typical 1.3 times the nominal subsea distribution voltage, the voltage drop during load may be limited very much compared to nominal load. To illustrate this, the case bellow might be a solution for a 600 km, 80 MW subsea grid.

100 Hz case based on Figure 3 and Figure 4:

    Topside transformer:

        Sn_tt = 100 MVA
        Un_sec = 90 kV
        Voltage reserves =1.35

    Subsea Transformer:

        Sn_ts = 100 MVA
        Un_pri = 79.2 kV
        Un_sec = 36 kV
        Voltage reserves = 1.35

    Subsea distribution:

        Un_distr = 27.7 kV
        Umax_distr = 36 kV (during no-load)

        Umin_distr = 20.1 kV (during 80 MW load)

    Cable input current:

        Iin_min= 367.5 A (during no-load)

        Iin_max= 686.4 A (during 80 MW load)

Simulated 100 Hz case with optimized subsea transformer ratio:

    Topside transformer:

        Sn_tt = 100 MVA
        Un_sec =90 kV
        Voltage reserves = none

    Subsea Transformer:

        Sn_ts = 100 MVA
        Un_pri = 85.5 kV
        Un_sec = 36.0 kV
        Voltage reserves = none

    Subsea distribution:

        Un_distr =27.7 kV
        Umax_distr = 35.9 kV (during no-load, corresponds to 1.3xUn_distr)
        Umin_distr =23.4 kV (during 60 MW load, PF = 0.97, corresponds to 0.85xUn_distr)

    Cable input current:

        Iin_min= 365.4 A (during no-load)
        Iin_max= 895.8 A (during 60 MW load, PF = 0.97)

    Cable maximum voltage and current:

        Ic_max =1004 A (during no-load, lower during load)
        Ic_max =91 kV (during no-load at topside, lower during load)

Given that a cable current of 1004 A can be handled in the cable looked at, 600 km step out case with 60 MW, PF =0.97 can be achieved. The voltage variations may be within the limits of a typical subsea system. The load could be increased above 60 MW, if voltage where increased topside as a function of the system load.

To reduce the cable current during full load, e.g. to approximately 510 A, the topside voltage could dynamically be increased about 35 % (Cable voltage rating may be 123 kV). There may be a risk that parts of the load will be tripped during full load operation and that over voltages into the subsea transformer primary side and switchgear might occur. Normally one cable may be loaded with several loads, so the danger of tripping all loads at the same time should not be very realistic. If this should be a challenge anyway, the most likely voltage source may be converter topside supplying the 100 Hz voltage to the cable. This voltage source might be programmed to trip very fast (within milliseconds) based on events with sudden current changes. In addition to this also the subsea transformer might be designed in a way so the saturation of the subsea transformer core during a trip of loads might be saturated and used as an over voltage protection.

When the cable length increases, the damping bands may get more and more narrow, and a clean harmonic free source and load gets more and more important. To ensure a stable voltage subsea regulating the voltage topside might be a good approach, but also variation the frequency might be a solution that can be evaluated from project to project.

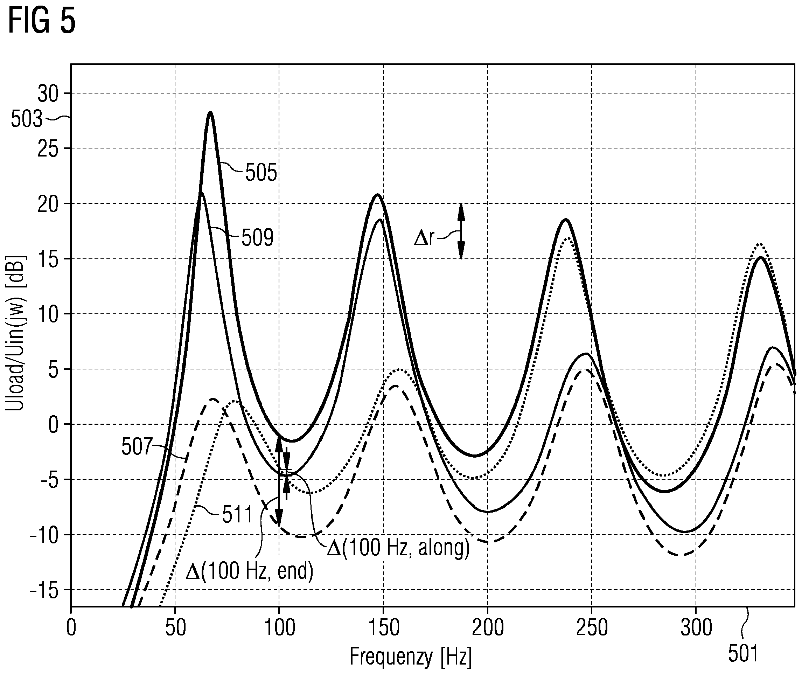

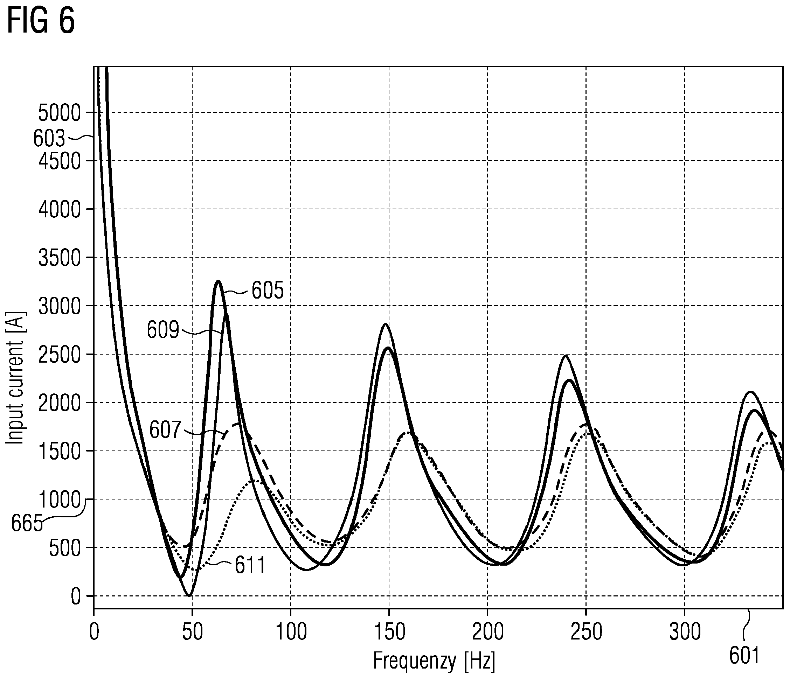

Another way of meeting the challenge of long step outs may be to compensation according to cable reactive power. If this is added based on 50 Hz, curves as shown in Figure 5 and Figure 6 can be calculated. The curves with end compensation have a reactor in each end of the cable, total

number of reactors is two. The case with along compensation have reactors along the cable equally distributed with the same reactive total value as for the end compensation, total number of rectors is 50. The compensation units might be a clean inductor or it can be combined with a passive or active filter to even more shape the resonance/damping frequencies.

According to an embodiment of the present invention, the arrangement 100 may first be operated at a working point 367 (see Fig. 3 corresponding to working point 467 in Fig. 4), i.e. at 100 Hz for a 600 km long cable, wherein substantially no load is connected to the second end 117 of the cable 111. Starting from the point 367, the power consumption 126 of the load 127 may be increased, in particular up to a power consumption of 80 MW. Upon increasing the power consumption 126, the frequency of the AC power 103 may be decreased to reach an operation point 369, as is indicated in Fig. 3, wherein the frequency is at a value or is labelled with reference sign 336 which corresponds to about 70 - 75 Hz. Upon decreasing the frequency from 100 Hz to about 70 - 75 Hz, the change of the voltage ratio from the situation of no load to a situation of an 80 MW load is substantially 0. Thus, no voltage change, in particular no voltage drop may occur, when the frequency is changed from 100 Hz to about 70 - 75 Hz upon increasing the power consumption from 0 - 80 MW.

The different working points are also indicated in Fig. 4 with reference signs differing only in the first digit. As can be taken from Fig. 4, the working point 467 (100 Hz for a 600 km long cable, no load) corresponds to an input current which is well below the rating limit 465 (assumed to be 1000 A). However, the working point 469 (corresponding to the case of a 600 km long cable having an 80 MW load connected to the cable) corresponds to an input current which is above the rating 465. In this situation, either the rating of the cable, i.e. the cable properties, may be adapted or selected, or another working point 471 may be chosen such that the change in the voltage ratio is in an acceptable limit and additionally the input current is below the rating 465.

As can be taken from Figs. 3 and 4, the working points 367, 369, 371 all lie between a first resonance peak 323 and a second resonance peak 325.

Figs. 5 to 8 illustrate graphs when a compensation measure for compensating of the capacitor effect of the cable 111 is performed according to embodiments of the present invention. The compensation methods may be applied exclusively or in combination with the adjustments/selections of frequency which have been described with reference to the Fig. 2 to 4.

The abscissas 501, 601, 701, and 801 in Figs. 5 to 8 denote the frequency, while the ordinates 503, 703 denote the voltage ratio of the second voltage $U_{load}$ and the first voltage $U_{in}$, while the ordinates 603, 803 denote the input current 104. Thereby, Figs. 5 and 6 relate to the cable length 1=600 km and illustrate the situations, where reactors are connected at the end points 113, 117 of the cable (curves 505 (no load) and 507 (80 MW load)) or where plural reactors are connected along the cable (curve 509 (no load) and curve 511 (80 MW load)). The reactors are selected (see the reactors 115, 119 and 116 illustrated in Fig. 1) to compensate for 50 Hz. Thereby, the curves 505, 507 have a reactor 115, 119 in each end of the cable 111. Thereby, the total amount of reactors is 2. In the case of reactors along the cable (curves 509, 511), the reactors 116 are equally distributed with the same reactive total value as for the end compensation, wherein the total amount or the total number of reactors 116 is 50, in the illustrated example. Other numbers are possible. The compensation units (also referred to as reactors 115, 116, 119) may be clean inductors or may be combined with a passive or active filter to even more shape the resonances/damping frequencies. For 100 Hz the change of the voltage ratio $\Delta$(100 Hz, along) with reactors distributed along the cable is smaller (in particular smaller than the threshold $\Delta r$) than the voltage ratio $\Delta$(100 Hz, end) with reactors connected at two ends the cable.

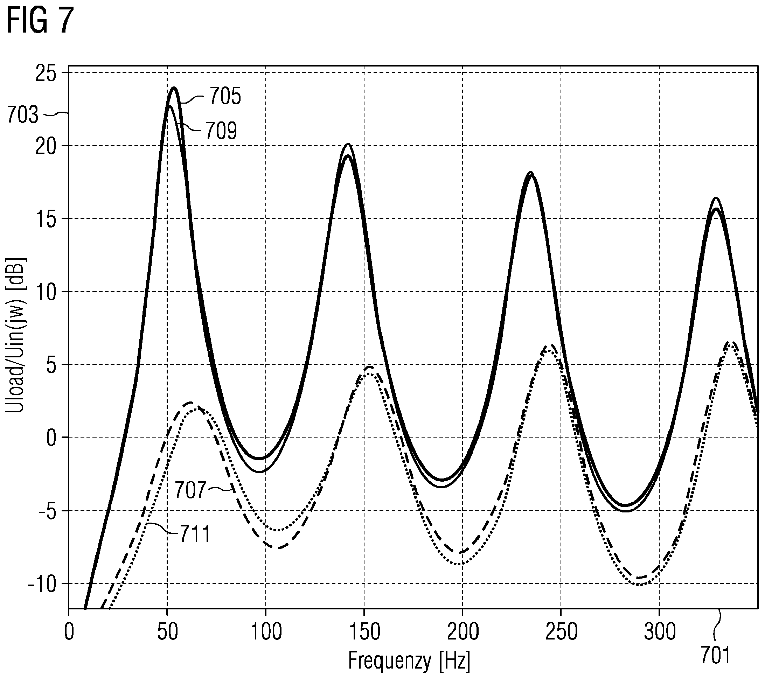

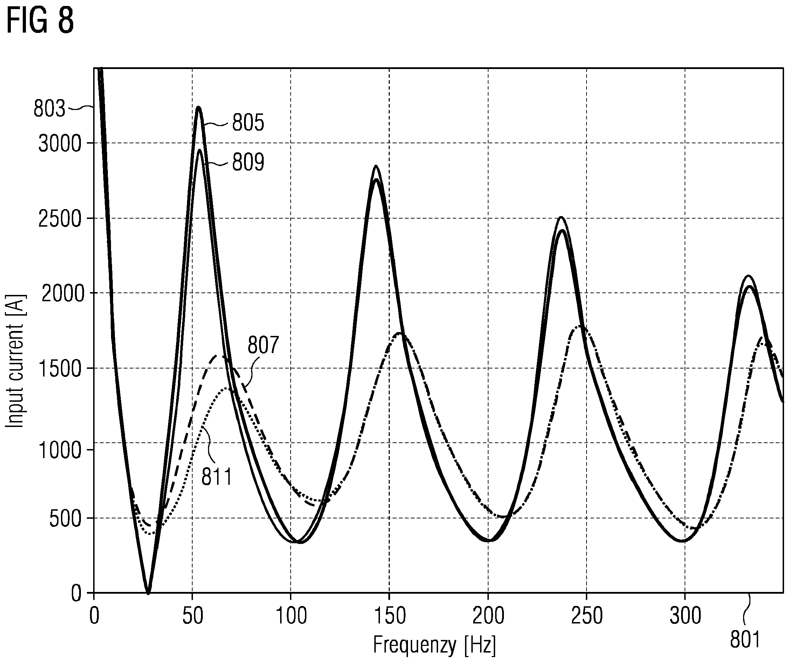

When the size of the reactors 115, 116 and/or 119 is changed to 16.7 Hz compensation and the other parameters are kept constant as for the 50 Hz case illustrated in Fig. 5 and 6, the graphs as illustrated in Fig. 7 and 8 are obtained. Thereby, the curves are labelled with reference signs differing only in the first digit compared to the reference signs used in Figs. 5 and 6.

By appropriately adjusting the reactive total value of the reactors 115, 116 and 119, a change in the voltage ratio may be kept within acceptable limits and also the input current may be kept below a rating limit of the cable 111.

In Fig. 5 to 8, a compensation according to the reactive power of the cable 111 is employed. If the reactors 115, 119 and/or the further reactors 116, illustrated in Fig. 1, are added or connected to the cable 111, the voltage values and current values according to Figs. 5 and 6 are obtained, when the reactors compensate for 50 Hz. Thereby, the reactors 115, 119 and also the further reactors 116 may be a clean inductor or may be combined with a passive or active filter to even more shape the resonance/damping frequencies.

The reactors 115, 119, 116 are provided to reduce or even remove the capacitor effect of the cable 111. The reactors 115, 119 and the further reactors 116 may be utilized in combination with one or more other measures or approaches to stabilize the voltage at the subsea site.

With reference to Fig. 5, the change in the voltage ratio $(U_{load}/U_{in})$ $\Delta(100$ Hz, end) for the compensation using the reactors 115 and 119 is indicated. Further, the change of the voltage ratio $\Delta(100$ Hz, along) for the case where the plural reactors 116 are connected at different locations 118 along the cable. As can be taken from Fig. 5, the respective changes of the voltage ratios are different for different frequencies and the frequency may be selected to minimize the respective voltage ratio difference.

Furthermore, the inductances and/or frequency may be selected such that the input current, as for example indicated in Fig. 6, is within the range of the rating of the cable, which may for example define a limit current of 1000 A. As can be appreciated from Fig. 6, the currents at a frequency 50 Hz are well below the current limit of 1000 A. Also for the frequency of 100 Hz, the currents are below the current limit 665.

Further, as can be taken from Fig. 5, the voltage ratio change $\Delta$(along) at 100 Hz is smaller than the voltage ratio change $\Delta$(along) at 50 Hz. Based on one or more criteria, the optimal frequency may be selected from the curves 5, 6 or 7 and 8, to meet the requirements of the equipment.

According to the disclosure of this application, three main approaches are described, in order to provide a method and an arrangement for transferring electrical power in the sea. The first approach uses the resonance effect active in the cable, to stabilize the voltage at subsea, in particular by selecting/adjusting the frequency depending on the cable length. A second approach performs a reactive compensation of a subsea supply cable along the length or at end points of the cable, to limit out the capacitive effect of the cable. A third approach uses for example a topside converter, to generate a required frequency and may apply or employ the converter, to vary (in particular slowly) the topside frequency and/or voltage as a function of a power consumption of the load connected at the subsea location. Further, in case of a trip of the load, the topside source may react very fast by tripping or to actively regulate down the voltage and damp out transients.

According to embodiments of the present invention, these three approaches may be performed separately or in any combination, i.e. the first approach, the second approach and the third approach may each be performed separately without performing the respective other approaches. Alternatively, two of the approaches, e.g. the first and the second, the first and the third, or the second and the third, approach may be performed in combination. Still further, all approaches, the first, the second and the third approach may be performed in combination.

In particular, according to the first approach, the cable capacitor effect may be utilized, to stabilize the subsea voltage from a situation where no load is connected to a situation where a load with a high power consumption is connected to the end of the cable which is located at the subsea location. This can be performed for example by looking or using frequencies higher than the lowest resonance frequency of the cable. This may be an alternative for the extreme long step-outs where the first cable resonance comes in conflict with the fundamental 50 Hz in a standard AC system.

The second approach may apply to compensate for the reactive power generated in the cable, along the cable or at the ends of the cable. If this is done, the voltage drop from no-load to a high power consumption load may be typically given by the serial impedance. This second approach may in particular a good solution for shorter step-outs such as step-outs (i.e. cable lengths) between 100 km and 300 km.

In particular, power consumption of the load may be in the range of 50 - 100 MW. Further transient conditions can be taken into account. Thereby, in particular a topside converter may be configured to damp out transients in the cable system.

In particular, a working frequency may be set such that core losses, skin/proxy-effect are in reasonable limits.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method for transferring electrical power (103) in the sea, the method comprising:

   generating AC power (103);
   guiding, at least partially underwater, the AC power (103) through a cable (111) from a first end (113) of the cable (111) to a second end (117) of the cable (111),
   wherein a first reactor (115) is connected near the first end (113) of the cable (111) and a second reactor (119) is connected near the second end (117) of the cable (111),

wherein inductances of the reactors (115,119) are selected, in order to at least partially compensate for reactive power generated in the cable (111),

the method further comprising

adjusting the frequency of the AC power (103) such that a voltage ratio (Uload/Uin) between a second voltage (Uload) and a first voltage (Uin) changes less than a threshold ($\Delta$r), when a power consumption (126) of a load (127) connected to the second end (117) of the cable (111) changes from a first value to a second value,

wherein the second voltage (Uload) is indicative of a potential difference between the second end of the cable and a reference potential (137),

wherein the first voltage (Uin) is indicative of a potential difference between the first end (113) of the cable (111) and the reference potential (137), **characterized in that** adjusting the frequency comprises calculating plural voltage ratio changes (305,307,335,337) for plural test frequencies (301), for each test frequency considering at least two test power consumptions of loads, in order to obtain the respective voltage ratio change,

wherein the frequency to be adjusted is selected from the plural test frequencies for which the calculated voltage ratio change ($\Delta$(50Hz,200km), $\Delta$(100Hz,600km)) is lower than the threshold ($\Delta$r).

2. Method according to claim 1, wherein further reactors (116), in particular between 3 and 60 reactors, are connected along the cable (111) between the first end (113) and the second end (117).

3. Method according to claim 1 or 2, wherein the inductances of the reactors (113,119) and/or the further reactors (116) are selected based on a frequency of the AC power (103) and properties of the cable (111).

4. Method according to one of the preceding claims, wherein the reactors (115, 119) and/or the further reactors (116) are connectable and disconnectable from the cable (111).

5. Method according to one of the preceding claims, wherein at least one reactor of the reactors (115,119) or the further reactors (116) comprises an active and/or passive filter.

6. Method according to one of the preceding claims, wherein the inductances of the further reactors (116) are adjusted, in order to avoid resonances close to the frequency of the AC power.

7. Method according to one of the preceding claims, wherein the reactors (115,119) and/or the further reactors (116) provide reactive compensation for 16.7 Hz or 50 Hz.

8. Method according to one of the preceding claims, wherein the power consumption (126) of a load (127) connected to the second end (117) of the cable (111) changes from from 0 MW to 100 MW.

9. Method according to any one of the preceding claims, further comprising

calculating plural input currents (405,407,435,437) for plural test frequencies (401), the input current representing a respective current (104) of the generated AC power (103) supplied to the first end (113) of the cable (111),

for each test frequency considering at least one test power consumption of a load,

wherein the frequency to be adjusted is selected from the plural test frequencies for which the input current is within a range (465) according to a rating of the cable.

10. Method according to any one of the preceding claims, wherein a frequency between resonance peaks (323,325,327,329) of a calculated voltage ratio curve (307) is selected, in particular between a first (323) and a second resonance peak (325) or in particular between a second (325) and a third resonance peak (327),

wherein the frequency in particular further depends on properties of the cable, in particular cross-sectional size and/or material of the cable.

11. Method according to one of the preceding claims, further comprising:

transforming a voltage of the AC power (103) to a higher voltage and supplying the transformed voltage to the first end (113) of the cable (111); and/or

transforming the AC power guided through the cable (111) at the second end (117) of the cable (111) and supplying the transformed AC power to a load (127).

12. Method according to one of the preceding claims, wherein the frequency of the AC power is between 10 Hz and 300 Hz, in particular between 50 Hz and 150 Hz, further in particular different form 50 Hz, wherein in particular the cable (111) is arranged at least partially, in particular 80% and 100 % of the length of the cable, underwater,

wherein in particular the AC power is supplied from a AC power supply (101), in particular generator or a converter, to the first end of the cable.

**13.** Method according to any one of the preceding claims, wherein the first voltage (Uin) is predetermined and the second voltage (Uload) is calculated for a given power consumption (126) of the load (127), in particular utilizing a model (143) of the cable (111), further in particular including plural PI-elements (133),
wherein the second end (117) of the cable (111) is between 1000 m and 4000 m below sea level, wherein the cable has a length (1) between 100 km and 1000 km, in particular between 200 km and 600 km, wherein the voltage at the cable is in particular between 80 kV and 100 kV,
the method in particular further comprising:
depending on the load (127), adjusting the frequency and/or the first voltage (Uin), in particular involving decreasing the frequency when power consumption of the load increases.

**14.** Arrangement (100) for transferring electrical power (103) in the sea, the arrangement comprising:

a power supply (101) for generating AC power (103);
a cable (111) for guiding, at least partially underwater, the AC power (103) through the cable (111) from a first end (113) of the cable to a second end (117) of the cable;
a first reactor (115) connected near the first end (113) of the cable; and
a second reactor (119) connected near the second end (117) of the cable,
wherein inductances of the reactors (115,119) are selected, in order to at least partially compensate for reactive power generated in the cable (111),
wherein the arrangement is adapted to adjust the frequency of the AC power (103) such that a voltage ratio (Uload/Uin) between a second voltage (Uload) and a first voltage (Uin) changes less than a threshold (Δr), when a power consumption (126) of a load (127) connected to the second end (117) of the cable (111) changes from a first value to a second value,
wherein the second voltage (Uload) is indicative of a potential difference between the second end of the cable and a reference potential (137),
wherein the first voltage (Uin) is indicative of a potential difference between the first end (113) of the cable (111) and the reference potential (137) **characterized in that** the arrangement is adapted, for adjusting the frequency, to calculate plural voltage ratio changes (305,307,335,337) for plural test frequencies (301), for each test frequency considering at least two test power consumptions of loads, in order to obtain the respective voltage ratio change,

wherein the frequency to be adjusted is selected from the plural test frequencies for which the calculated voltage ratio change (Δ(50Hz,200km), Δ(100Hz,600km)) is lower than the threshold (Δr).

**Patentansprüche**

**1.** Verfahren zur Übertragung von elektrischer Energie (103) im Meer, wobei das Verfahren Folgendes umfasst:

Erzeugen von Wechselstrom (103),
zumindest teilweise unter Wasser erfolgendes Leiten des Wechselstroms (103) durch ein Kabel (111) von einem ersten Ende (113) des Kabels (111) zu einem zweiten Ende (117) des Kabels (111),
wobei eine erste Drossel (115) in der Nähe des ersten Ende (113) des Kabels (111) verbunden ist und eine zweite Drossel (119) in der Nähe des zweiten Endes (117) des Kabels (111) verbunden ist,
wobei Induktanzen der Drosseln (115, 119) ausgewählt werden, um in dem Kabel (111) erzeugte Blindleistung wenigstens teilweise zu kompensieren,
wobei das Verfahren ferner Folgendes umfasst: Einstellen der Frequenz des Wechselstroms (103) derart, dass ein Spannungsverhältnis (Uload/Uin) zwischen einer zweiten Spannung (Uload) und einer ersten Spannung (Uin) sich weniger ändert als ein Schwellenwert (Δr), wenn sich ein Stromverbrauch (126) eines mit dem zweiten Ende (117) des Kabels (111) verbundenen Verbrauchers (127) von einem ersten Wert auf einen zweiten Wert ändert,
wobei die zweite Spannung (Uload) eine Potenzialdifferenz zwischen dem zweiten Ende des Kabels und einem Referenzpotenzial (137) anzeigt,
wobei die erste Spannung (Uin) eine Potenzialdifferenz zwischen dem ersten Ende (113) des Kabels (111) und dem Referenzpotenzial (137) anzeigt,
**dadurch gekennzeichnet, dass**
das Einstellen der Frequenz das Berechnen mehrerer Spannungsverhältnisänderungen (305, 307, 335, 337) für mehrere Prüffrequenzen (301) umfasst, wobei für jede Prüffrequenz wenigstens zwei Prüfstromverbräuche von Verbrauchern berücksichtigt werden, um die jeweilige Spannungsverhältnisänderung zu erhalten, wobei die einzustellende Frequenz aus den mehreren Prüffrequenzen ausgewählt wird, bei denen die berechnete Spannungsverhältnisänderung (Δ(50 Hz, 200 km), Δ(100 Hz, 600 km)) unter dem Schwellenwert (Δr) liegt.

2. Verfahren nach Anspruch 1, wobei weitere Drosseln (116), insbesondere zwischen 3 und 60 Drosseln, entlang des Kabels (111) zwischen dem ersten Ende (113) und dem zweiten Ende (117) verbunden werden.

3. Verfahren nach Anspruch 1 oder 2, wobei die Induktanzen der Drosseln (113, 119) und/oder der weiteren Drosseln (116) auf Grundlage von einer Frequenz des Wechselstroms (103) und Eigenschaften des Kabels (111) ausgewählt werden.

4. Verfahren nach einem der vorhergehenden Ansprüche, wobei die Drosseln (115, 119) und/oder die weiteren Drosseln (116) mit dem Kabel (111) verbindbar und von diesem trennbar sind.

5. Verfahren nach einem der vorhergehenden Ansprüche, wobei wenigstens eine Drossel der Drosseln (115, 119) oder der weiteren Drosseln (116) einen aktiven und/oder passiven Filter aufweist.

6. Verfahren nach einem der vorhergehenden Ansprüche, wobei die Induktanzen der weiteren Drosseln (116) eingestellt werden, um Resonanzen in der Nähe der Frequenz des Wechselstroms zu vermeiden.

7. Verfahren nach einem der vorhergehenden Ansprüche, wobei die Drosseln (115, 119) und/oder die weiteren Drosseln (116) Blindleistungskompensation für 16,7 Hz oder 50 Hz ermöglichen.

8. Verfahren nach einem der vorhergehenden Ansprüche,
wobei der Stromverbrauch (126) eines mit dem zweiten Ende (117) des Kabels (111) verbundenen Verbrauchers (127) sich von 0 MW auf 100 MW ändert.

9. Verfahren nach einem der vorhergehenden Ansprüche, das ferner Folgendes umfasst:
Berechnen mehrerer Eingangsströme (405, 407, 435, 437) für mehrere Prüffrequenzen (401), wobei der Eingangsstrom einen entsprechenden Strom (104) des in das erste Ende (113) des Kabels (111) eingespeisten erzeugten Wechselstroms (103) darstellt,
für jede Prüffrequenz Berücksichtigen zumindest eines Prüfstromverbrauchs eines Verbrauchers,
wobei die einzustellende Frequenz aus den mehreren Prüffrequenzen ausgewählt wird, bei denen der Eingangsstrom innerhalb eines einer Belastbarkeit des Kabels entsprechenden Bereichs (465) liegt.

10. Verfahren nach einem der vorhergehenden Ansprüche, wobei eine Frequenz zwischen Resonanzspitzen (323, 325, 327, 329) einer berechneten Spannungsverhältniskurve (307), insbesondere zwischen einer ersten (323) und einer zweiten Resonanzspitze (325) oder insbesondere zwischen einer zweiten (325) und einer dritten Resonanzspitze (327), ausgewählt wird,
wobei die Frequenz insbesondere ferner von den Eigenschaften des Kabels, insbesondere der Querschnittsgröße und/oder dem Material des Kabels, abhängt.

11. Verfahren nach einem der vorhergehenden Ansprüche, das ferner Folgendes umfasst:

Transformieren einer Spannung des Wechselstroms (103) auf eine höhere Spannung und Einspeisen der transformierten Spannung in das erste Ende (113) des Kabels (111) und/oder Transformieren des durch das Kabel (111) geleiteten Wechselstroms am zweiten Ende (117) des Kabels (111) und Einspeisen des transformierten Wechselstroms in einen Verbraucher (127).

12. Verfahren nach einem der vorhergehenden Ansprüche, wobei die Frequenz des Wechselstroms zwischen 10 Hz und 300 Hz, insbesondere zwischen 50 Hz und 150 Hz, liegt und ferner insbesondere nicht 50 Hz beträgt,
wobei insbesondere das Kabel (111) zumindest teilweise, insbesondere zu 80 % und 100 % der Länge des Kabels, unter Wasser angeordnet wird,
wobei insbesondere der Wechselstrom von einer Wechselstromversorgung (101), insbesondere einem Generator oder einem Umrichter, in das erste Ende des Kabels eingespeist wird.

13. Verfahren nach einem der vorhergehenden Ansprüche, wobei die erste Spannung (Uin) im Vorhinein bestimmt und die zweite Spannung (Uload) für einen gegebenen Stromverbrauch (126) des Verbrauchers (127), insbesondere unter Verwendung eines Modells (143) des Kabels (111), das ferner insbesondere mehrere PI-Glieder (133) aufweist, berechnet wird,
wobei das zweite Ende (117) des Kabels (111) zwischen 1000 m und 4000 m unter dem Meeresspiegel liegt, wobei das Kabel eine Länge (1) von zwischen 100 km und 1000 km, insbesondere zwischen 200 km und 600 km, aufweist, wobei die Spannung an dem Kabel insbesondere zwischen 80 kV und 100 kV beträgt, wobei das Verfahren ferner Folgendes umfasst:
abhängig von dem Verbraucher (127) Einstellen der Frequenz und/oder der ersten Spannung (Uin), insbesondere unter Einbeziehung eines Herabsetzens der Frequenz, wenn der Stromverbrauch des Verbrauchers ansteigt.

**14.** Anordnung (100) zur Übertragung von elektrischem Strom (103) im Meer, wobei die Anordnung Folgendes umfasst:

eine Stromversorgung (101) zum Erzeugen von Wechselstrom (103),
ein Kabel (111) zum zumindest teilweise unter Wasser erfolgenden Leiten des Wechselstroms (103) durch das Kabel (111) von einem ersten Ende (113) des Kabels zu einem zweiten Ende (117) des Kabels,
eine in der Nähe des ersten Endes (113) des Kabels verbundene erste Drossel (115),
eine in der Nähe des zweiten Endes (117) des Kabels verbundene zweite Drossel (119),
wobei Induktanzen der Drosseln (115, 119) ausgewählt werden, um in dem Kabel (111) erzeugte Blindleistung wenigstens teilweise zu kompensieren,
wobei die Anordnung angepasst ist, um die Frequenz des Wechselstroms (103) derart einzustellen, dass ein Spannungsverhältnis (Uload/Uin) zwischen einer zweiten Spannung (Uload) und einer ersten Spannung (Uin) sich weniger ändert als ein Schwellenwert (Δr), wenn sich ein Stromverbrauch (126) eines mit dem zweiten Ende (117) des Kabels (111) verbundenen Verbrauchers (127) von einem ersten Wert auf einen zweiten Wert ändert,
wobei die zweite Spannung (Uload) eine Potenzialdifferenz zwischen dem zweiten Ende des Kabels und einem Referenzpotenzial (137) anzeigt,
wobei die erste Spannung (Uin) eine Potenzialdifferenz zwischen dem ersten Ende (113) des Kabels (111) und dem Referenzpotenzial (137) anzeigt,
**dadurch gekennzeichnet, dass**
die Anordnung angepasst ist zum Einstellen der Frequenz, um mehrere Spannungsverhältnisänderungen (305, 307, 335, 337) für mehrere Prüffrequenzen (301) zu berechnen, wobei für jede Prüffrequenz wenigstens zwei Prüfstromverbräuche von Verbrauchern berücksichtigt werden, um die jeweilige Spannungsverhältnisänderung zu erhalten,
wobei die einzustellende Frequenz aus den mehreren Prüffrequenzen ausgewählt wird, bei denen die berechnete Spannungsverhältnisänderung (Δ(50 Hz, 200 km), Δ(100 Hz, 600 km)) unter dem Schwellenwert (Δr) liegt.

## Revendications

**1.** Un procédé de transfert d'une alimentation électrique (103) dans la mer, le procédé comprenant :

la génération d'une alimentation en c.a. (103),
le guidage, au moins partiellement sous l'eau, de l'alimentation en c.a. (103) au travers d'un câble (111) à partir d'une première extrémité (113) du câble (111) vers une deuxième extrémité (117) du câble (111),
dans lequel un premier réacteur (115) est raccordé près de la première extrémité (113) du câble (111) et un deuxième réacteur (119) est raccordé près de la deuxième extrémité (117) du câble (111),
dans lequel des inductances des réacteurs (115, 119) sont sélectionnées afin de compenser au moins partiellement une puissance réactive générée dans le câble (111),
le procédé comprenant en outre
l'ajustement de la fréquence de l'alimentation en c.a. (103) de sorte qu'un rapport de tension (Uload/Uin) entre une deuxième tension (Uload) et une première tension (Uin) change moins qu'un seuil (Δr), lorsqu'une consommation d'énergie (126) d'une charge (127) raccordée à la deuxième extrémité (117) du câble (111) change d'une première valeur vers une deuxième valeur,
dans lequel la deuxième tension (Uload) est indicative d'une différence de potentiel entre la deuxième extrémité du câble et un potentiel de référence (137),
dans lequel la première tension (Uin) est indicative d'une différence de potentiel entre la première extrémité (113) du câble (111) et le potentiel de référence (137),
**caractérisé en ce que**
l'ajustement de la fréquence comprend le calcul d'une pluralité de modifications de rapport de tension (305, 307, 335, 337) pour une pluralité de fréquences de test (301), pour chaque fréquence de test, la prise en compte d'au moins deux consommations d'énergie de test de charges afin d'obtenir la modification de rapport de tension respective,
dans lequel la fréquence à ajuster est sélectionnée parmi la pluralité de fréquences de test pour lesquelles la modification de rapport de tension calculée (Δ(50 Hz, 200 km), Δ(100 Hz, 600 km)) est inférieure au seuil (Δr).

**2.** Le procédé selon la revendication 1, dans lequel d'autres réacteurs (116), plus particulièrement entre 3 et 60 réacteurs, sont raccordés le long du câble (111) entre la première extrémité (113) et la deuxième extrémité (117).

**3.** Le procédé selon la revendication 1 ou 2, dans lequel les inductances des réacteurs (113, 119) et/ou des autres réacteurs (116) sont sélectionnées en fonction d'une fréquence de l'alimentation en c.a. (103) et de propriétés du câble (111) .

**4.** Le procédé selon l'une quelconque des revendications précédentes, dans lequel les réacteurs (115, 119) et/ou les autres réacteurs (116) peuvent être raccordés à et déconnectés du câble (111).

**5.** Le procédé selon l'une quelconque des revendications précédentes, dans lequel au moins un réacteur des réacteurs (115, 119) ou des autres réacteurs (116) comprend un filtre actif et/ou passif.

**6.** Le procédé selon l'une quelconque des revendications précédentes, dans lequel les inductances des autres réacteurs (116) sont ajustées de façon à éviter des résonances proches de la fréquence de l'alimentation en c.a.

**7.** Le procédé selon l'une quelconque des revendications précédentes, dans lequel les réacteurs (115, 119) et/ou les autres réacteurs (116) fournissent une compensation réactive pour 16,7 Hz ou 50 Hz.

**8.** Le procédé selon l'une quelconque des revendications précédentes, dans lequel la consommation d'énergie (126) d'une charge (127) raccordée à la deuxième extrémité (117) du câble (111) passe de 0 MW à 100 MW.

**9.** Le procédé selon l'une quelconque des revendications précédentes, comprenant en outre
le calcul d'une pluralité de courants en entrée (405, 407, 435, 437) pour une pluralité de fréquences de test (401), le courant en entrée représentant un courant respectif (104) de l'alimentation en c.a. générée (103) fourni à la première extrémité (113) du câble (111),
pour chaque fréquence de test, la prise en compte d'au moins une consommation d'énergie de test d'une charge,
dans lequel la fréquence à ajuster est sélectionnée parmi la pluralité de fréquences de test pour lesquelles le courant en entrée se situe à l'intérieur d'une plage (465) en fonction d'un calibre du câble.

**10.** Le procédé selon l'une quelconque des revendications précédentes, dans lequel une fréquence entre des crêtes de résonance (323, 325, 327, 329) d'une courbe de rapport de tension calculée (307) est sélectionnée, plus particulièrement entre une première (323) et une deuxième crête de résonance (325) ou plus particulièrement entre une deuxième (325) et une troisième crête de résonance (327),
dans lequel la fréquence dépend en outre plus particulièrement de propriétés du câble, plus particulièrement d'une taille en section transversale et/ou d'un matériau du câble.

**11.** Le procédé selon l'une quelconque des revendications précédentes, comprenant en outre :

la transformation d'une tension de l'alimentation en c.a. (103) en une tension plus élevée et la fourniture de la tension transformée à la première extrémité (113) du câble (111), et/ou
la transformation de l'alimentation en c.a. guidée au travers du câble (111) au niveau de la deuxième extrémité (117) du câble (111) et la fourniture de l'alimentation en c.a. transformée à une charge (127).

**12.** Le procédé selon l'une quelconque des revendications précédentes, dans lequel la fréquence de l'alimentation en c.a. se situe entre 10 Hz et 300 Hz, plus particulièrement entre 50 Hz et 150 Hz, encore plus particulièrement différente 50 Hz,
dans lequel plus particulièrement le câble (111) est agencé au moins partiellement, plus particulièrement entre 80% et 100 % de la longueur du câble, sous l'eau,
dans lequel plus particulièrement l'alimentation en c.a. est fournie à partir d'un bloc d'alimentation en c.a. (101), plus particulièrement un générateur ou un convertisseur, à la première extrémité du câble.

**13.** Le procédé selon l'une quelconque des revendications précédentes, dans lequel la première tension (Uin) est prédéterminée et la deuxième tension (Uload) est calculée pour une consommation d'énergie donnée (126) de la charge (127), plus particulièrement au moyen d'un modèle (143) du câble (111), plus particulièrement encore comprenant une pluralité d'éléments PI (133),
dans lequel la deuxième extrémité (117) du câble (111) se situe entre 1000 m et 4000 m sous le niveau de la mer, dans lequel le câble possède une longueur (1) entre 100 km et 1000 km, plus particulièrement entre 200 km et 600 km, dans lequel la tension au niveau du câble se situe plus particulièrement entre 80 kV et 100 kV,
le procédé comprenant plus particulièrement en outre :
en fonction de la charge (127), l'ajustement de la fréquence et/ou de la première tension (Uin), plus particulièrement impliquant la diminution de la fréquence lorsque la consommation d'énergie de la charge augmente.

**14.** Un agencement (100) de transfert d'une alimentation électrique (103) dans la mer, l'agencement comprenant :

un bloc d'alimentation électrique (101) destiné à la génération d'une alimentation en c.a. (103), un câble (111) destiné au guidage, au moins partiellement sous l'eau, de l'alimentation en c.a. (103) au travers du câble (111) d'une première extrémité (113) du câble vers une deuxième extrémité (117) du câble,

un premier réacteur (115) raccordé près de la première extrémité (113) du câble, et

un deuxième réacteur (119) raccordé près de la deuxième extrémité (117) du câble,

dans lequel des inductances des réacteurs (115, 119) sont sélectionnées afin de compenser au moins partiellement une puissance réactive générée dans le câble (111),

dans lequel l'agencement est adapté de façon à ajuster la fréquence de l'alimentation en c.a. (103) de sorte qu'un rapport de tension (Uload/Uin) entre une deuxième tension (Uload) et une première tension (Uin) change moins qu'un seuil ($\Delta$r) lorsqu'une consommation d'énergie (126) d'une charge (127) raccordée à la deuxième extrémité (117) du câble (111) change d'une première valeur vers une deuxième valeur,

dans lequel la deuxième tension (Uload) est indicative d'une différence de potentiel entre la deuxième extrémité du câble et un potentiel de référence (137),

dans lequel la première tension (Uin) est indicative d'une différence de potentiel entre la première extrémité (113) du câble (111) et le potentiel de référence (137)

**caractérisé en ce que**

l'agencement est adapté, pour l'ajustement de la fréquence, de façon à calculer une pluralité de modifications de rapport de tension (305, 307, 335, 337) pour une pluralité de fréquences de test (301), pour chaque fréquence de test, la prise en compte d'au moins deux consommations d'énergie de test de charges afin d'obtenir la modification de rapport de tension respective, dans lequel la fréquence à ajuster est sélectionnée parmi la pluralité de fréquences de test pour lesquelles la modification de rapport de tension calculée ($\Delta$(50 Hz, 200 km), $\Delta$(100 Hz, 600 km)) est inférieure au seuil ($\Delta$r).

FIG 1

EP 2 822 135 B1

FIG 2

FIG 3

EP 2 822 135 B1

19

301

FIG 4

FIG 5

## FIG 6

EP 2 822 135 B1

FIG 7

EP 2 822 135 B1

# FIG 8

EP 2 822 135 B1

**REFERENCES CITED IN THE DESCRIPTION**

**Patent documents cited in the description**

- US 20130033103 A1
- WO 0126201 A1